# EUROPEAN PATENT APPLICATION

(11) **EP 1 332 857 A1**
(43) Date of publication of application: **06.08.2003**
(21) Application number: 03250464.9
(22) Date of filing: 24.01.2003
(51) Int. Cl.: B29C 44/34, B29C 44/36, B29C 44/46, C08J 9/12

(54) **Process and apparatus for CO2 foaming having variable pressure control**

(30) Priority: 01.02.2002 GB 0202349
(71) Applicant: BEAMECH GROUP LIMITED, Manchester M17 1JT (GB)
(72) Inventor: Blackwell, James Brian, Prestbury, SK10 4AP (GB); Buckley, Geoffrey, Oldham, OL2 8HZ (GB); Blackwell, Stephen William, Cheshire, SK10 5JS (GB); Blackwell, John James, High Peak (GB)
(74) Representative: W.P. Thompson & Co.

(57) **Abstract**

A permeable discharge head for use in the production of polymeric foams and through which a reactant mixture and blowing agent can be discharged with a controlled pressure drop. The permeable discharge head includes a pressure reduction device comprising one or more individual perforated plates or sintered woven wire meshes (34). The area for flow of reacants through the pressure reduction device can be varied by means of a distortable annular membrane/diaphragm (40) arranged to be selectively displaced by means of hydraulic, pneumatic or other pressure.

## Description

The present invention relates to processes and apparatus for the production of foam which use CO₂ as the blowing/frothing agent and is concerned in particular with a means for achieving variable pressure control in such processes and apparatus.

In our International Application WO-A- 97/02938, we described an apparatus and process for producing polymeric foam, wherein reactive foam components and a low-boiling point frothing agent are brought together and passed through a pressure reduction device from which the resulting mixture is discharged, with the pressure being reduced and froth being formed. In practice, the CO₂ used as the frothing agent can be either in a liquid and/or part-liquid and/or gaseous state within the reaction mixture which is passed through the pressure reduction device.

The required pressure of the reactants and the CO₂ whether in liquid, part-liquid, gaseous or a combination of one or more of these, immediately upstream of the pressure reduction device depends upon the quantity of CO₂ in the formulation.

In general, the pressure necessary before the pressure reduction device is related to the equilibrium pressure of the blend of reactants and CO₂. As the reactants and CO₂ pass through the pressure reduction device, CO₂ gas is released and the gas goes to nucleation sites which are required to form the necessary bubbles for a commercially acceptable foam.

For the production of a good foam, it has been found that in many cases the pressure immediately upstream of the pressure reduction device needs to be approximately at or slightly below the equilibrium pressure for the blend of reactants and CO₂.

The equilibrium pressure of the blend can change for a number of reasons, such as the temperature of the reactants and CO₂ and the amount of CO₂ in liquid or gaseous form.

The pressure drop across the pressure reduction device can also change because of variation in device manufacture, variations in flow rate, the setting up of the device or any changes in the through passages of the device.

In practice, it is found that if the pressure immediately upstream of the pressure reduction device is too low then foam defects of unacceptably sized bubbles are formed. If the pressure immediately upstream of the pressure reduction device is too high, then the CO₂ gas is released too late and again gives rise to defects such as larger holes and bands of coarse and fine cells, called striations.

It was realised therefore that it would be advantageous if a means could be devised which would enable continuous independent adjustment of the pressure as the reactants and CO₂ enter the pressure reduction device whilst making foam.

It was also understood that where the pressure reduction device comprises some form of constricted passage arrangement through which the reactants and CO₂ are passed, such as one or more holes, apertures, slots, passages etc. then the pressure upstream of the pressure reduction device depends on the effective area of the pressure reduction device itself. Thus, for example, if one is passing the reactants and CO₂ through a plurality of similar sized holes, then if the number of holes available is reduced, the pressure upstream will rise due to the reduction in the number of possible flow passages for the reactants and CO₂ through the device.

In accordance with the present invention in its broadest aspect, the pressure before the pressure reduction device is controllable by the provision of a means for varying the effective area of the pressure reduction device.

Advantageously, this is achieved by means of a distortable flexible membrane/diaphragm which is adapted to be selectively urged into contact with an upstream surface of the pressure reduction device in order to reduce the effective working area thereof.

Preferably, the flexible membrane/diaphragm is arranged to be selectively displaced by means of hydraulic, pneumatic or other pressure.

In a currently preferred arrangement, the flexible diaphragm is of annular format.

Conveniently, a radially outer part of the annular diaphragm is clamped against an outer part of the upstream surface of the pressure reduction device and a radially inner part of the annular diaphragm is clamped around the outlet region of an inlet pipe carrying the reactants and CO₂ towards the pressure reduction device, the side of the flexible annular diaphragm remote from the pressure reduction device being disposed in a chamber to which hydraulic or pneumatic pressure can be selectively applied.

Preferably, the chamber is defined by a housing which embraces the outlet end of said inlet pipe.

Whereas the pressure reduction device could simply be in the form of a single perforated plate having one or more holes or slots therethrough or two or more such plates disposed in series, we prefer to use a pressure reduction device of the type shown in our earlier International Application WO-A-97/02938 which is in the form of a diffuser element comprising two or more layers of wire mesh which have been sintered together such that contact points of the mesh layers are fused together by the sintering process. Still more preferably, the mesh layers are of woven wire mesh as described in our International Application WO-A-98/30376.

In the case of the latter diffuser elements, it has been found that by discharging the mixture through such a diffuser element, the mixture is subjected to mixing and/or spreading during its passage therethrough and the resultant foam is very uniform in nature, is of high quality and is relatively free from irregularities such as voids or pin holes. The use of sintered woven wire mesh composites allow the possibility to control permeability, pore size, and mixing/tortuosity independently.

When using such sintered woven wire mesh pressure reduction devices, the required pressure drop across the sinter is a function of the design and construction of the sinter as well as its thickness and open-cross sectional area. Thus, by selectively covering or opening parts of the upstream side of the sinter by means of the flexible diaphragm, the pressure in the reactants and CO₂ immediately upstream of the sinter can be adjusted.

The invention is described further, hereinafter, by way of example only, with reference to the accompanying drawings, in which:-
Fig. 1 is a sectional side view of a known pressure reduction device;
Fig. 2 is a sectional side view of one embodiment of a pressure reduction device having variable pressure, in accordance with the present invention;
Figs. 3 and 4 are exploded perspective views illustrating two different embodiments of woven wire mesh sinters for use in pressure reduction devices in accordance with the present invention; and
Fig. 5 is a sectional side view of a modified embodiment in accordance with this invention.

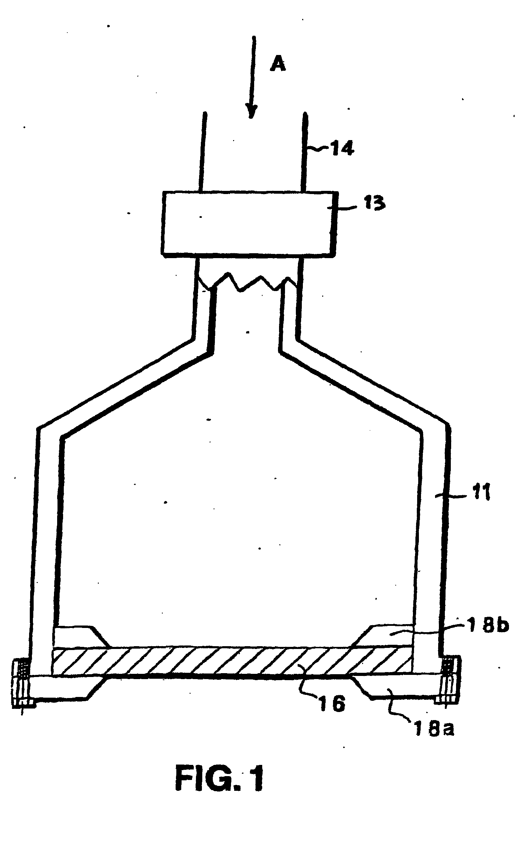

Fig. 1 is a diagrammatic cross-sectional view of a known pressure reduction device from our International Application WO-A-98/30376 which comprises a generally bell-shaped housing 11 having a coupling 13 at one end for connection to an inlet pipe 14 carrying, in use, the necessary foam components travelling in direction A. Mounted at the downstream, outlet end of housing 11 is a single composite element 16 constructed of a number of individual disc-shaped woven wire meshes which have been sintered together to form a unitary body which has a structure such as to require division, divergence and convergence of flow paths in three dimensions within its axial thickness, considered in the direction of flow therethrough, whereby to achieve repeated changes of direction and mixing of the flows as they pass through the body. The element 16 is clamped firmly between flanges 18a, 18b, possibly with the addition of circular seals (not shown) to assist in preventing flow of foam components around the periphery of the element 16.

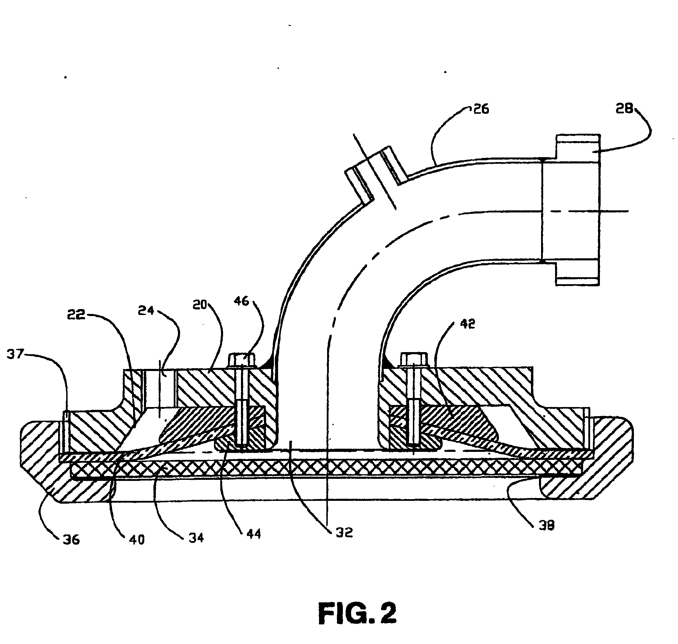

Fig. 2 shows one example of how a bell-shaped housing of the general type illustrated in Fig. 1 can be modified to form an embodiment in accordance with the present invention.

The device of Fig. 2 comprises a housing 20 having an inlet connection 24 at its upper end by which hydraulic fluid, which may be polyol, can be selectively introduced to the housing interior space. Welded to a face of the housing 20 is a curved pipe element 26 which carries a pipe connector 28 at its end located remote from the housing for fitting to a further pipe (not shown) carrying reactants and CO₂ from an upstream location in the process where they have been brought together. The other end of the curved pipe section 26 is welded to a bore in the housing 20 defining an exit mouth 32 for directing the reactants and CO₂ towards a diffuser element 34 mounted to the periphery of the housing part 20 by means of an annular cap 36 which is screwed onto the housing part 20 via threads 37. An annular washer 38 can be disposed around the underside of the peripheral edge of the diffuser element.

Clamped firmly between the bottom rim of the housing 22 and the diffuser element 34 is an outer peripheral region of an annular membrane 40, the inner peripheral region of which is clamped, between two further annuli 42, 44, to the housing 20 by means of bolts 46.

The membrane 40 is made of a very tough but flexible material such as silicone rubber, urethane etc. It will be appreciated that when hydraulic fluid is fed via aperture 24 into the space between the housing unit wall 22 and the membrane 40, the membrane can be selectively distorted/deflected whereby to progressively cover and close down from the radially outer edge inwards, the effective area of the diffuser element 34. By varying the hydraulic pressure, the effective area of the diffuser element can thus be selectively decreased or increased, hence increasing or decreasing the pressure in/on the reactants and CO₂ correspondingly.

It will also be appreciated that the invention provides a means of automatically maintaining a constant pressure in the process fluid when the rate of flow is changed because the diaphragm can distort to regain equilibrium with the hydraulic or pneumatic control pressure applied.

Preferably, the diffuser element is of the type described in our WO-A-98/30376 comprising individual woven wire meshes sintered together to form a composite diffuser element.

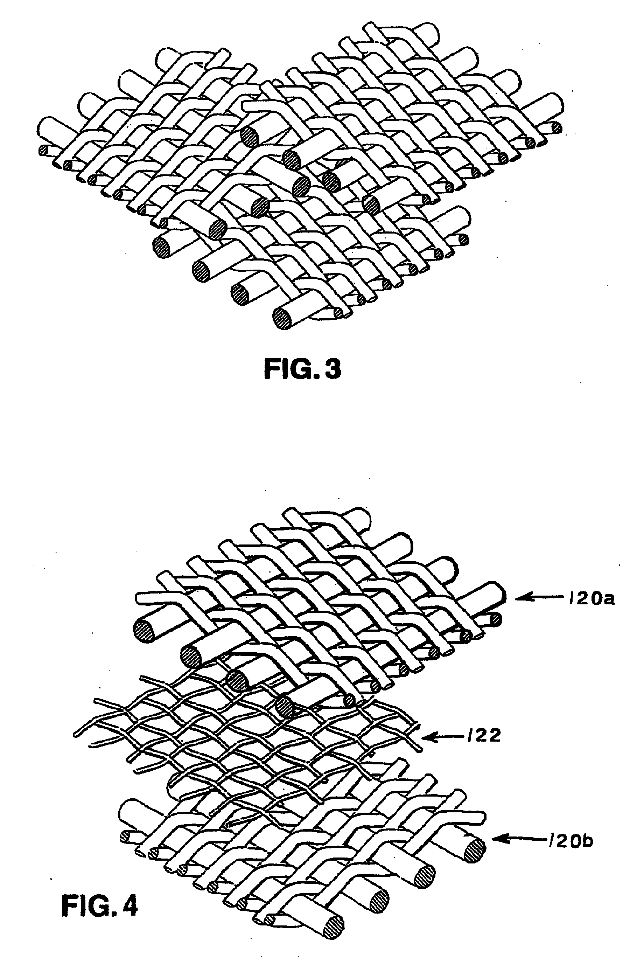

Examples of such sintered wire mesh diffuser elements are shown in Figures 3 and 4.

Fig. 3 shows three layers of plain Dutch weave with adjacent layers oriented at 90°.

Fig. 4 shows a preferred arrangement for forming the composite element which comprises two plain Dutch weave outers 120a, 120b oriented at 90° to each other, and a plain weave inner 122. In the plain Dutch weave 120a, the larger wires run East-West, as viewed. In the plain Dutch weave 120b, the larger wires run North-South.

An inherent characteristic of sintered woven wire mesh composite as used herein is that it can be designed and manufactured to give a wide range of permeability at a constant pore size rating.

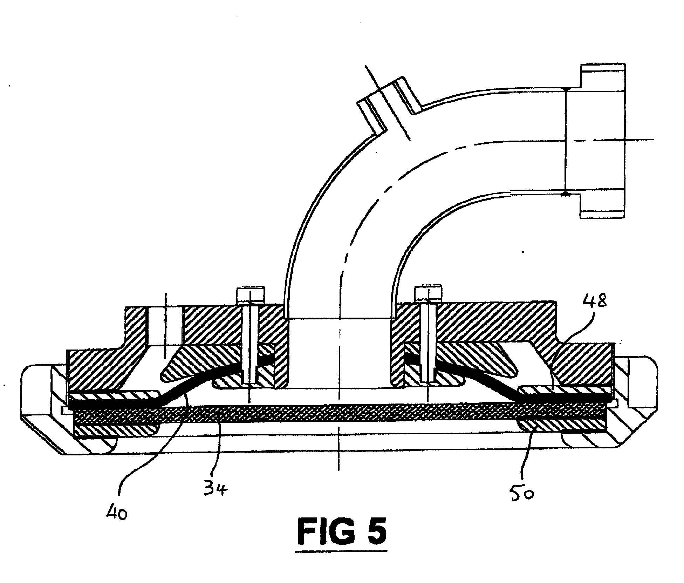

Referring to Fig. 5 there is shown a modified embodiment which is essentially the same as that of Fig. 2 except for the addition of a respective annular support ring 48, 50 above and below (ie. on the upstream and downstream sides of) the sintered woven wire mesh diffuser element 34. It has been found that this can sometimes improve the performance of the system and result in an improved foam quality.

Although in the embodiment of Fig. 5 the radially inner working diameters of the two support rings 48, 50 are the same, in other embodiments they can be different. For example, in some embodiments it can be advantageous for the radially inner diameter of the downstream ring 50 to be smaller than that of the upstream ring 48.

These support rings can also be used in cases when the diffuser element comprises one or more perforated plates as compared to sintered woven wire mesh.

### EXAMPLE

An example illustrating the advantageous use of the present invention is described hereinafter:

On a foam run (see formulation below)

| | pph |
|---|---|
| Polyol | 100 |
| TDI | 54.756 |
| Water | 4.7 |
| Amine | 0.65 |
| Silicone | 1.7 |
| Tin | 0.22 |
| CO₂ | 4.3 |
| Total Flowrate = | 199.59 kg per minute |

The following observations were made:

| | | |
|---|---|---|
| 1. | Hydraulic fluid pressure | = 5 bar |
| | Reactant & CO₂ pressure = 5.5 bar before the sinter | = 5.5 bar |
| | Diameter of the sinter woven wire mesh | = 150 mm |
| | The dynamic equilibrium pressure | = 6.8 bar |

The foam had many large holes and was not acceptable.

| | | |
|---|---|---|
| 2. | Increasing the hydraulic pressure | = 16 bar |
| | Reactant & CO₂ pressure before the sinter | = 6.8 bar |

The foam was free from large holes and was of acceptable quality.

After the foam run the membrane was inspected. It was observed that the membrane had been in contact with the woven wire mesh sinter, reducing the diameter to approximately 125 mm. This corresponds in diameter with the increase in pressure that was found in the reactant and CO₂ pressure, taking into consideration the path of the reactants in flowing through the woven wire mesh.

It can be seen that this variable pressure control can also be applied readily to
(a) Pressure reduction devices comprising plates with holes as described in EP-A-767728
(b) Varying the pressure before the gate bar of the type described in EP-A-645226.

In our earlier application EP-A-0952910, reference was made to the provision of a pressure controlling valve in the process fluid before the final discharge device. It has been found that the pressure reduction "profile" can be critical in the production of foam with good, uniform cell structure and the present invention, when used in conjunction with the previously described valve, can permit the improved pressure profile necessary.

The present invention may be applicable to any of the currently known systems for the production of urethane foam blown by liquid or gaseous CO₂ or any combination of these. For example, the discharge device may consist of a narrow slot substantially across the width of the foaming machine through which the process fluid is passed and through which the pressure is reduced. In this case, the flexible diaphragm may control the opening of the slot so as to control the pressure drop across it. Similarly, if the discharge device consists of one or more perforated plates, the flexible diaphragm will be configured to vary the number of holes exposed to the fluid and thereby the pressure drop across these plates.

Although we have referred throughout to the use of CO₂ as the blowing agent and indeed this is the gas likely to be used in practice, in principle any other suitable gas, eg. propane, could be used in place of CO₂ in the process to which the apparatus of the present invention is applied.

## Claims

1. A permeable discharge head for use in the production of polymeric foams and through which a reactant mixture and blowing agent can be discharged with a controlled pressure drop, the permeable discharge head including a pressure reduction device comprising one or more individual perforated plates or sintered woven wire meshes (34), **characterised in that** the area for flow of reactants through the pressure reduction device can be varied by means of a distortable flexible membrane/diaphragm (40) arranged to be selectively displaced by means of hydraulic, pneumatic or other pressure.

2. A permeable discharge head according to claim 1, wherein the pressure reduction device comprises one or more said perforated plates having one or more holes or slots therein, or comprises an elongate slot.

3. A permeable discharge head according to claim 1, wherein the pressure reduction device is in the form of a composite diffuser element comprising two or more layers of wire mesh which have been sintered together such that contact points of the mesh layers are fused together by the sintering process.

4. A permeable discharge head according to claim 3, wherein said mesh layers are of woven wire mesh.

5. A permeable discharge head according to claim 1, 2 , 3 or 4, wherein the distortable flexible membrane/diaphragm is adapted to be selectively urged by means of said hydraulic, pneumatic or other pressure into contact with an upstream surface of the pressure reduction device in order to reduce the effective working area thereof.

6. A permeable discharge head according to claim 5, wherein the flexible diaphragm is of annular format.

7. A permeable discharge head according to claim 5 or 6, wherein a radially outer part of the annular diaphragm is clamped against an outer part of the upstream surface of the pressure reduction device and a radially inner part of the annular diaphragm is clamped around the outlet region of an inlet pipe carrying reactants and a gaseous blowing agent towards the pressure reduction device, the side of the flexible annular diaphragm remote from the pressure reduction device being disposed in a chamber to which said hydraulic or pneumatic or other pressure can be selectively applied.

8. A permeable discharge head according to claim 7 wherein hydraulics pressure is provided by a non reacting fluid in contact with one side of the flexible membrane whereby to provide a pressure to the process reactants on the other side of the membrane.

9. A permeable discharge head according to claim 7 or 8 wherein the chamber is defined by a housing which embraces the outlet end of said inlet pipe.

10. A permeable discharge head according to any of claims 1 to 9 further comprising respective support rings on the upstream and downstream sides of the pressure reduction device.

11. A permeable discharge head according to claim 10, wherein the radially inner diameter of the downstream support ring is smaller than that of the upstream support ring.

12. A permeable discharge head according to any of claims 1 to 11 wherein the flexible membrane/disphragm is made from rubber, synthetic rubber, polyurethane or silicone elastomer.

13. Apparatus as claimed in any of claim 1 to 12, further comprising a pressure control valve which couples the permeable discharge head to a common manifold into which all components of the foam are fed under pressure.

14. Apparatus according to any of claims 1 to 13, wherein the blowing agent is CO₂, pentane, acetone or any other blowing agent in liquid, gaseous, or part liquid and part gaseous form.
